# EUROPEAN PATENT APPLICATION

(11) **EP 0 748 103 A2**
(43) Date of publication of application: **11.12.1996**
(21) Application number: 96850097.5
(22) Date of filing: 20.05.1996
(51) Int. Cl.: H04M 3/50, H04M 3/42

(54) **Device and method for control of functions**

(30) Priority: 22.05.1995 SE 9501904
(71) Applicant: TELIA AB, 126 86 Farsta (SE)
(72) Inventor: Renström, Gert-Ove, 135 49 Älvsjö (SE); Goldstein, Mikael, 114 41 Stockholm (SE)
(74) Representative: Karlsson, Berne

(57) **Abstract**

The present invention relates to control of functions in a system. The system can consist of services in a telecommunications network, control of functions in a process system, control of functions in data applications etc. The invention allows that ordering is made verbally or by means of actuation of keys. According to the invention functions/services are divided into objects and operators which distinctly defines every service/function. The services are preferably arranged in a matrix system where the objects and the operators correspond to the lines respective columns in the matrix. Identification of existing functions after that is made by inspection of corresponding element in the matrix. By the invention is obtained a system where the hierarchical structure is avoided and one to the speech corresponding structure is obtained. The invention is at first hand usable at verbal ordering but can also be utilized for other purposes. The invention further specifies that a change between verbal and mechanical control can be performed at just any point of time.

## Description

### TECHNICAL FIELD

The present invention relates to a device and method at speech/voice control of functions. Said functions are for instance included in a telecommunications system. The invention can further be utilized for control of functions in computers and other equipment.

### PRIOR ART

In the telecommunications systems of today as well as in computers, different services and functions can be activated by means of selection from a menu. The menu selections are arranged in hierarchical structures. The implication of this is that a number of different levels must be passed before a wanted service or function is obtained. At selection by buttons, consequently, in a first phase, main menu selection, one out of a number of options shall be selected. When the selection has been made the user is admitted to a second level where there are further possibilites of selections. Depending on the structure of the system, a number of submenues will after that be passed before the wanted service or function is obtained.

In the patent document EP 585004 is described a speech controlled telecommunications system. The system is arranged to identify the speaker. After identification certain commands such as "call home", "call the office" etc can be introduced. By the document it is consequently previously known to utilize speech control.

In the patent document EP 453831 is described a system which by voice command can call different subscriber numbers. For each subscriber an individual call register is made up.

In the patent document US 513304 is described a platform for telephone network applications. DTMF-signalling or voice commands are used.

In patent document US 4 644 107 a speech controlled telephone is described which makes call by the name of the called party being pronounced. A command can consist of a sequence of words.

### DESCRIPTION OF THE INVENTION

### Technical problem

The speech response services which are controlled via DTMF-signalling are generally constructed according to a hierarchical system arranged in so called menues, where one by specifying a button selection (for instance by indicating button 2 [out of five alternatives] in a menu will reach a submenu, in order to in this make a new button selection (for instance 1 [out of four alternatives] ). The button control functions hierarchically. i.e. one has to specify a selection on each menu level (main menu, submenu I and submenu II etc) to reach the wanted function in the lowest existing submenu (for instance 2, 1, 3 [main menu = 2, submenu I = 1, and submenu II = 3]). At speech control in speech response systems the use of buttons is replaced by voice/speech commands, for instance break, help, change etc.

The problem with speech control is that it often in the inherent structure of the language does not seem necessary to reach different functions in a hierarchical way, but that one in the language often makes use of so called direct addressing (not hierarchical addressing). I. e. if one wants to change "change code" then one does not first pronounce "settings" in the main menu, then "change code" in the submenu, but one directly says "change code" wihout first establishing an intermediate hierarchical level (i.e. "settings"). Because the probability of recognizing a word at the speech recognition equipment increases the smaller the number of words is that it has to select from, it is important not to have more possible selections than necessary since the probability to get the right word then is as high as possible.

By the system "adapting" in a deterministic way as a consequence of which first word that is used (if one for instance first says the word "change", the system "understands" by focussing the speech recognition on the imaginable words that can exist after one has said "change"), i.e change greeting message or change code... By this the accuracy of aim to recognize the right word increases, at the same time as a situation adapted help information can be provided by the system if the user does not know which following word he/she shall say after having said the first word.

In addition to the hierarchical structure that is utilized at control of services in the telecommunications system, the corresponding problem recurs at control of different equipment such as for instance computers, control systems etc. Also in these systems the order structure is hierarchically arranged. Consequently there is a need at both speech control and at not speech control to have possibility to utilize not hierarchical systems for access to functions and services in different systems.

### THE SOLUTION

The present invention relates to a method for control of functions in a system. A control device actuates the functions which are divided in an operator and an object. The control device first specifies an operator or an object, and after that an object or an operator. The combination of object and operator appoints the function which is activated.

The functions consist of services in a telecommunications network and/or control parameters in processes or computer systems. In a first embodiment the control device is actuated by verbal ordering where a speech recognition equipment identifies the verbal ordering.

In a second embodiment the ordering is given mechanically by actuation of for instance keys.

The objects and and the operators are arranged in a matrix system. The elements in the matrixes specifies which combinations of the objects and the operators that correspond to existing functions. A specification of an operator or of an object appoint the functions that are concerned. In the cases where a specification of an operator or an object only can result in that one function is activated, this is activated without the remaining object/operator needing to be specified.

A user of the system is allowed to change between mechanical and verbal ordering by actuation of a special key. Said change is allowed at just any point of time. The verbal ordering follows the structure of a natural language. The mechanical ordering is allowed to follow a hierarchical structure.

The invention further relates to a device for control of functions in a system. Control devices are at that arranged to actuate the functions. The functions are divided into an operation and an object. The control device is arranged to first specify theoperation or object, whereafter the control device is arranged to specify the object or the operation, at which the combination of the object and the operation appoints the function. The functions are arranged to constitute part services in a telecommunications system or control parameters in processes or computer systems. The control device is in a first embodiment arranged to identify verbal ordering. The objects and the operations are arranged in a matrix system where the elements in the matrix are arranged to specify which combinations of the objects and the operations that correspond to existing functions. Current functions which exist in the system are specifyd by the combination of operation and object. In the case an specification of an operation or an object distinctly appoints a function, this is actuated without the belonging object or operation being further specified.

### ADVANTAGES

By the suggested solution a system where the hierarchical principle is avoided is obtained. At speech control this means that the structure of the language is followed in a natural way. The invention is at that concentrated upon that the intention of the first part of the ordering is utilized. In the so far known systems which are adaptive, the adaptivity is based on frequency (how many times previously has the user changed the greeting message in relation to other functions which have been performed, or how many times has a certain function been utilized).

The invention consequently gives a system which has a rudimentary intelligence.

By giving up the hierarchical principle in favour of a flat intentional structure which allows direct access to the function, the levels located in between in the hierarchy can be skipped. If one for instance in a system is in the main menu (the main vocabulary) and wants to reach the function "change PIN", the hierarchical structure first must say "settings" and after that "change PIN", whereas one in the flat structure only has to say "change PIN" (operator and object) to reach this function. One consequently is spared at least one level. This will be more evident if it is a deeper hierarchy.

Further the probability of a hit is increased because only one level need to be passed instead of two. This also results in time-savings since wanted function will be reached faster, making the network load smaller. From user point of view also time-savings can be made since the voice dialogue follows a natural language structure, which the hierarchical one does not, which results in that the number or errors which the user makes, with following loss, is minimized.

### DESCRIPTION OF FIGURES

Figure 1 shows the invention in relation to a traditional DTMF-control in a telecommunications network.

Figure 2 shows example of a matrix and the elements therein.

### DETAILED EMBODIMENT

In the following the invention is described with reference to the figures and the terms therein.

The present invention is applicable in a number of different fields such as control of functions in computer systems, control of functions in processes or control of services in a telecommunications network etc. The control functions in the different systems at this utilize the keyboard of respective system. In the computer system the keyboard which belongs to the computer system consequently is used. At process control are in a similar way utilized keyboards which are especially adapted to the process control, or an ordinary keyboard for a computer system. In connection with control of services in a telecommunications network the keyboard which belongs to the telephone is used.

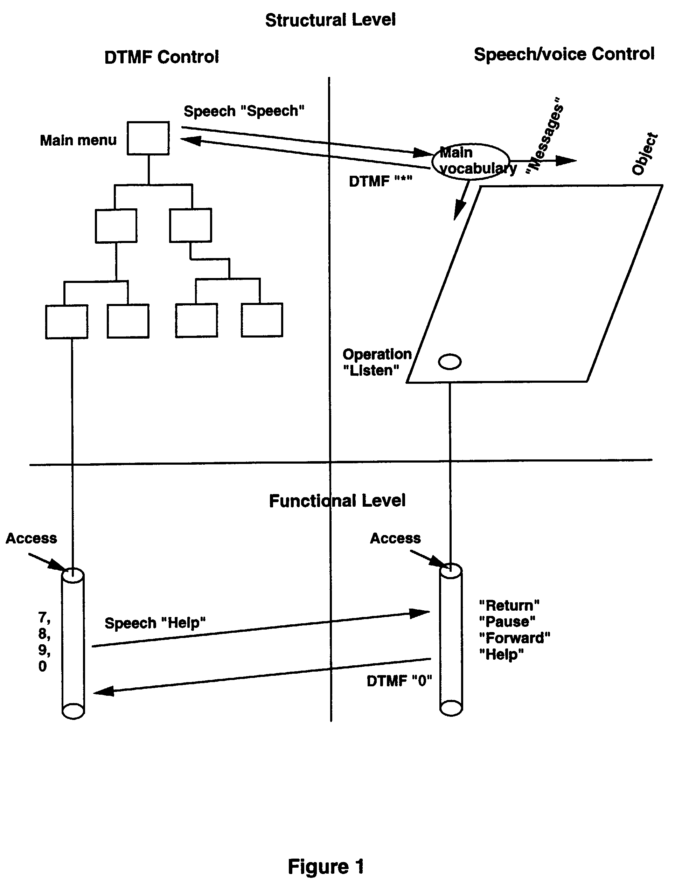

Specific for the invention is that a system with speech control is introduced where the verbal ordering is made by specification of an operation and an object. Parallell with the speech control possibility there is a possibility to utilize key control. At key control a hierarchical structure can be utilized as well as a structure which corresponds to the one which is used at the speech control. In the following the invention is described on the basis of a system according to Figure 1 where on the one hand a speech control is utilized, and on the other a keyset control on a telephone with DTMF-control.

The user dialogue is consequently based on two technologies, DTMF-control and speech control. Each technology has a user dialogue of its own which gives complete access to all functions of the system. Because the different technologies provide different conditions for the dialogue, the dialogue does not have the same structure, but the user can on the whole change mode (DTMF > voice, or voice > DTMF) whenever he/she wants.

The speech controlled user dialogue in the system is divided into a structural and a functional level. The functional level includes all functions which the service offers. Fundamental for the user dialogue is that each command to which the user has access has a distinct determination of an operator and an object. Each function consists, on the structural level, of two parts "the operator" and "object". The two parts together identifies respective command. Operation + object = function.

Examples of functions are listen to + message
and
change + PIN.

"Listen" and "change" are operations whereas "message" and "PIN" are objects. The structural level has a main vocabulary (word list) which includes all allowed operations and objects. When the user is at the structural level in speech control mode and wants to execute a command, he/she says (operation + object) at which he/she is moved from the structural level to the requested function.

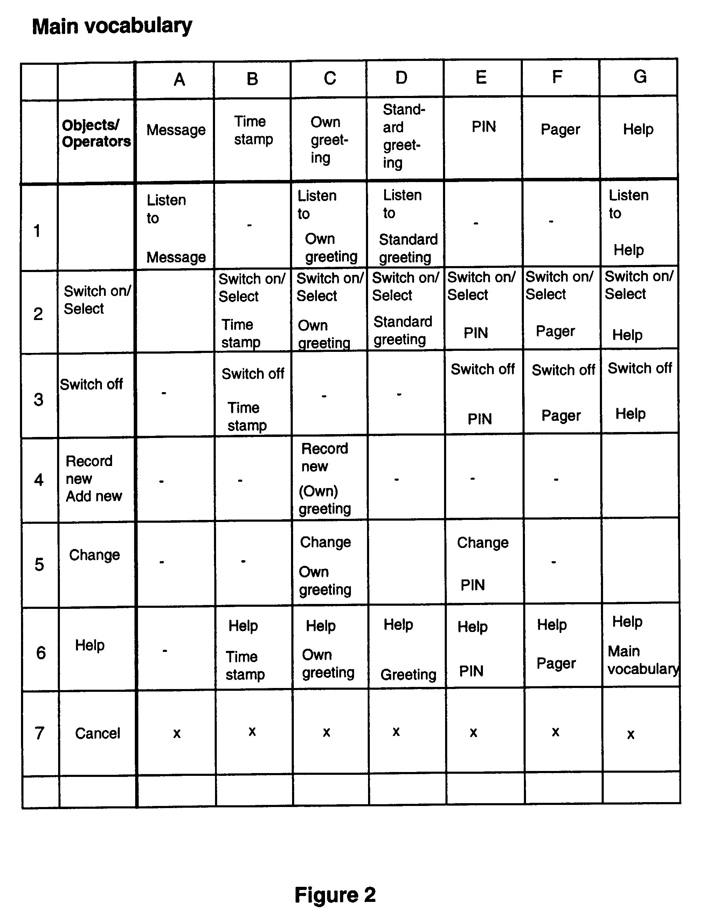

The structural level is described below in a matrix where the objects are in the lines A-G and the operations in columns 1-7 (see Figure 2). In current cells there are names of the functions which the user will reach if he/she says the corresponding word. The succession between the operation and object is of no importance, i.e. it is allowed to say "PIN change" to reach the function "change PIN". One can however chose to apply restrictions if that is wanted, i.e. one can for instance only allow a natural word order to exist in the dialogue, i.e. the operation first and after that the object (change + PIN).

The names of the objects and the operations together forms a main vocabulary, which is the main vocabulary which is active when the user is on the structural level. Change of mode, change from speech control to DTMF-control is performed when the user for instance presses "zero", i.e. requests the function "help" in DTMF-way. The system gives the help-prompt on the main menu and when the prompt is finished the user will land up in the main menu.

According to Figure 1 the invention is divided into one structural and one functional level at speech control. If one presses star on the functional level in speech control mode, one will land up directly in the main menu in DTMF-mode.

In Figure 2 speech control is shown. Structural adaptive level. The function is reached by specifying operator (1-7) listen, swith on, etc plus object (A-G) informing of time stamp, PIN-code etc. If only operator is specified at time out, or at two wrong selections/recognitions of object, situation adapted help information is generated automatically.

The functional level is a common concept for all functions which are hold within the service, all functionality is within the functions.

Change of mode is defined within respective function. The basic rule is that DTMF "zero" (0) and "star" (cancel) results in change of mode. DTMF-mode starts after "zero" by the help prompt being read, after that the function starts from the beginning. At change by means of "star" the system returns to the main menu. In the following the functions are described according to the matrix in Figure 2 and its functionality.

The services of the system can always be reached via access on the functional level, i.e. one automatically gets into a "listen to the message" state in the system. If one wants to reach the structural level one says the command "cancel" which results in that one lands up in the main vocabulary (compare with DTMF where one by pressing star lands up in the main menu).

### Listen to + Messages

The function is called from the main vocabulary by:
- Operation:: "Listen"
- Object:: "Messages"

This of course takes it for granted that one then is not in the listening-state.

Function: The messages are played back one at a time in the same way as in DTMF-mode. The operations within "Listen to Messages" are the same as in DTMF-mode, i.e. the following vocabulary:
"Delete" [6]
"Repeat" [7]
"Stop" [8]
"Start" [9]
"Next" [10]
"Cancel" [*]
"Help" [0]
"Undo" [*] (undo Delete)

The following keys are active and results in change of mode and activation of respective function:

| | | |
|---|---|---|
| "0" | Help | DTMF-help is read and normal DTMF-function follows |
| "*" | Cancel | The main menu in DTMF is read. |

### Switch on/Select + Time stamp

The function is called from the main vocabulary by:
- Operation:: "Switch on"
- Object:: "Time stamp".
Function: Identical with corresponding in DTMF-mode.

### Switch off + Time stamp

The function is called from the main vocabulary by:
- Operation:: "Switch off"
- Object:: "Time stamp".
Function: Identical with corresponding in DTMF-mode.

### Select + Own Greeting

The function is called from the main vocabulary by:

- Operation:: "Select"
- Object:: "Own Greeting" or "Greeting".
Function: Own Greeting is played back in the same way as in DTMF-mode. The operations within "Select Own Greeting" is the same as in DTMF-mode, that is the following vocabulary:
"Repeat"
"Cancel"
"Help"
Change of mode. The following keys are active and results in change of mode and activation of respective function:

| | | |
|---|---|---|
| "0" | Help | DTMF-help is read and normal DTMF-function follows. |
| "*" | Cancel | The main menu in DTMF-mode is read. |

### Record Own Greeting

The function is called from the main vocabulary by:
- Operation:: "Record" or "Record new"
- Object:: "Own Greeting" or "Greeting".
Function: Recording tone is heard whereafter the Own Greeting is recorded in the same way as in DTMF-mode. The operations within "Record Own Greeting" are the same as in DTMF-mode, that is the following vocabulary:
"Repeat"
"Cancel"
"Help"
Change of mode. The following keys are active and results in change of mode and activation of respective function.

| | | |
|---|---|---|
| "0" | Help | DTMF-help is read and normal DTMF-function follows. |
| "*" | Cancel | The main menu in DTMF-mode is read. |

### Help Own Greeting

The function is called from the main vocabulary by:
- Operation:: "Help"
- Object:: "own Greeting" or "Greeting".
Function: A help text concerning Own Greeting is played back. For instance "Greeting is the message which is played back to the one who is being connected to the telephone answering machine. As an alternative to the standard greeting which always is in the telephone answering machine you can record a greeting of your own; after that you can choose if you want that your own greeting or the standard greeting shall be played back. You can also listen to or make changes to a recorded greeting of your own. Conclusion: Tell what you want to do with your own greeting; the following possibilities exist: Record, Select, Listen and Change. Saying Help when in "Own greeting" is sufficient to get help adapted for the situation.

### Time Out Own Greeting

- Prompt:: "Say Record, Select, Listen or Change".

### Select Standard Greeting

The function is called from the main vocabulary by:
- Operation:: "Select"
- Object:: "Standard Greeting"
Function: The Standard Greeting is played back in the same way as in DTMF-mode. The operations within "Select Standard Greeting" is the same as in DTMF-mode, that is the following vocabulary:
"Repeat"
"Cancel"
"Help"
Change of mode. The following keys are active and results in change of mode and activation of respective function.

| | | |
|---|---|---|
| "0" | Help | DTMF-help is read and normal DTMF-function follows. |
| "*" | Cancel | The main menu in DTMF-mode is read. |

### Listen to Standard Greeting

The function is called from the main vocabulary by:
- Operation:: "Listen"
- Object:: "Standard Greeting"
Function: The Standard Greeting is played back in the same way as in DTMF-mode. The operations within "Listen to Standard Greeting" are the same as in DTMF-mode, that is the following vocabulary:
"Repeat"
"Cancel"
"Help"
The following keys are active and results in change of mode and activation of respective function.

| | | |
|---|---|---|
| "0" | Help | DTMF-help is read and normal DTMF-function follows. |
| "*" | Cancel | The main menu in DTMF-mode is read. |

### Change PIN

The function is called from the main vocabulary by:
- Operation:: "Change"
- Object:: "PIN" or "Personal Code".
Function: First one says one's old PIN and after that the new one, and after that one confirms, the operations within "Change PIN" are the same as in DTMF-mode, that is the following vocabulary:
"Cancel"
"Help"
Change of mode. The following keys are active and results in change of mode and activation of respective function.

| | | |
|---|---|---|
| "0" | Help | DTMF-help is read and normal DTMF-function follows. |
| "*" | Cancel | The main menu in DTMF-mode is read. |

### Switch on PIN

The functions are called from the main vocabulary by:
- Operation:: "Switch on"
- Object:: "PIN" or "Personal Code".
Function: Identical with corresponding in DTMF-mode.

### Switch off PIN

The function is called from the main vocabulary by:
- Operation:: "Switch off"
- Object:: "PIN" or "Personal Code".
Function: Identical with corresponding in DTMF-mode.

### Switch on Pager (Repeat, next)

The function is called from the main vocabulary by:
Operation: "Switch on"
Object: "Pager".
Function: Identical with corresponding in DTMF-mode.

### Switch off Pager (Repeat, next)

The function is called from the main vocabulary by:
- Operation:: "Switch off"
- Object:: "Pager".
Function: Identical with corresponding in DTMF-mode.

### Listen Help

The function is called from the main vocabulary by:
- Operation:: "Listen"
- Object:: "Help".
Function: A help text concerning Listen is played back. For instance "There are a number of things you can listen to. Select one of the following - Messages, Own Greeting or Standard Greeting".

### Time out Listen

Prompt: "Say Messages, Own Greeting or Standard Greeting".

In the systems of today one uses a hierarchical principle which follows the menu structure of for instance DTMF-signalling and where button/key-alternatives are replaced in a strict way by speech commands. At the same time one does not take into consideration the flexibility and language structure which is exists in the language.

The understanding of speech which here occurs after one has said the first word (operator or object) is here based on the intention of the operator (change + greeting message), in contrast to other adaptive systems, where the adaptivity is based on frequency (how many times previously the user has changed the greeting message in relation to other functions which have been performed).

By giving up the hierarchical principle in favour of a flat intentional structure which allows direct access to the function, the levels located in between in the structure can be skipped.

If one for instance is in the main menu (the main vocabulary) and wants to reach the function change PIN, one in the hierarchical structure first has to say "settings", and after that "change PIN", whereas one in the flat structure only has to say "change PIN" in order to reach this function. One consequently is spared at least one level. This will be even more obvious if it is a deeper hierarchy.

This results in that the probability of a hit will increase, since only one level need to be passed instead of two. This also implies time savings, because one more rapidly reaches wanted function, which results in that the network will become less loaded.

From user point of view timesavings can also be achieved, since the voice dialogue follows a natural language structure, which the hierarchical one does not, resulting in that the number of errors made by the user, with belonging time losses, is minimized.

A user in a telecommunications system intends to utilize services in it. The services can at this be possible to call in an ordinary way, or be accessible during a present call or at initiating of call. At the initiation of the service in question the subscriber specifies an operator, for instance select, and an object, for instance time stamp. The system recognizes the words in question and identifies in the matrix according to Figure 2 the corresponding service which in this case is to switch on time stamp. After identification of the service in question the functional level is connected, at which access to the service in question is obtained. Control of the different functions which at this exist in the current function is after that made by verbal orders. In the case that the subscriber wants to change from verbal ordering to ordering by means of keypad on the telephone, this is made by keying the figure zero. The system is after that arranged in the hierarchical system which in the figure is represented by DTMF-control. The service in question can be controlled in different directions. Messages are read, deleted, messages are changed etc.

A user can also go back to the main menu in the DTMF-control by pressing the key "star". In order to after that reach a wanted service, the subscriber has to maneuvre through the different levels in the hierarchical control model.

At the utilization of the invention in for instance process control systems or in connection with computers the keyboard of for instance a terminal for writing is utilized. By the keyboard of this terminal a heavily extended possibility to initiate different orders by means of keys is obtained. The different keys can at that be given different meanings which relate to operations and objects. Also in this case orders can of course be given by verbal ordering concerning operation and object. By the possibility to give verbal or mechanical orders from a keyboard is in this connection an extended possibility given to apply the above described ideas for control of functions in a system. Also in this system is given a possibility to change between speech control and control by keyboard by transmission of different symbols, for instance "star" or "zero". Depending on which symbol that is transmitted at the change, the change will at this change between the different maneuvring modes in the function when one has access to this or returning to the main menu in respective control system.

The invention is not restricted to the in the above specified description or by the patent claims, but can be subject to modifications within the frame of the idea of invention.

## Claims

1. Method for control of functions in a system, and a control device actuates the functions, **characterized** in that the functions are divided into an operator and an object, that the control device first specifies the operators or the object, that the control device after that specifies the object or the operators, and that the combination of the object and the operators appoints the function.

2. Method according to patent claim 1,
**characterized** in that the functions consist of services in a telecommunications system.

3. Method according to patent claim 1,
**characterized** in that the functions consist of control parameters in processes.

4. Method according to patent claim 1,
**characterized** in that the functions consist of control parameters in a computer system.

5. Method according to any of the previous patent claims,
**characterized** in that the control device is actuated by verbal orders.

6. Method according to patent claim 5,
**characterized** in that a speech recognition equipment identifies the verbal ordering.

7. Method according to patent claim 1,
**characterized** in that the objects and the operators are arranged in a matrix system, and that the elements in the matrix specify which combinations of the objects and the operators which correspond to the corresponding functions.

8. Method according to any of the previous patent claims,
**characterized** in that a specification of one of the operators/objects appoints which of the functions that are concerned.

9. Method according to any of the previous patent claims,
**characterized** in that a specification of one of the operators or one of the objects which only can result in one of the functions, results in that the function is activated without the object/operators being specified.

10. Method according to any of the previous patent claims,
**characterized** in that the control device is actuated by a mechanical ordering, for instance the use of a button/key.

11. Method according to any of the previous patent claims,
**characterized** in that actuation of a certain key changes from speech control to mechanical ordering or vice versa and that said change is allowed to occur at just any point of time.

12. Method according to any of the previous patent claims,
**characterized** in that the verbal ordering is allowed to follow the structure of a natural language.

13. Method according to any of the previous patent claims,
**characterized** in that the mechanical reproduction is allowed to follow a hierarchical structure.

14. Device for control of functions in a system, and that control devices are arranged to actuate the functions,
**characterized** in that the functions are divided into an operator and an object, that the control device is arranged to first specify the operators or the object, that the control device is after that arranged to specify the object or the operators, and that the combination of the object and the operators are arranged to appoint the function.

15. Device according to patent claim 1,
**characterized** in that the functions are arranged to consist of services in a telecommunications system.

16. Device according to patent claim 1,
**characterized** in that the functions are arranged to consist of control parameters in processes.

17. Device according to patent claim 1,
**characterized** in that the functions are arranged consist of control parameters in a computer system.

18. Device according to any of the patent claims 14-17,
**characterized** in that the control device is arranged to be actuated by verbal ordering.

19. Device according to patent claim 18,
**characterized** in that the identification of the verbal ordering is performed in a speech recognition equipment.

20. Device according to patent claim 14,
**characterized** in that the objects and the operators are arranged in a matrix system, and that elements in the matrix are arranged to specify which combinations of the objects and the operators that correspond to existing functions.

21. Device according to any of the patent claims 14-19,
**characterized** in that a specification of one of the operators/objects is arranged to appoint which of the functions that is concerned.

22. Device according to any of the patent claims 14-21,
**characterized** in that a specification of one of the operators, or one of the objects which only results in one of the functions, is arranged to result in that the function is activated without the object/operators being specified.

23. Device according to any of the patent claims 14-22,
**characterized** in that the control device is arranged to be actuated by a mechanical order, for instance the pressing of a key.

24. Device according to any of the patent claims 14-23,
**characterized** in that a change between speech control and mechanical order, or vice versa, is arranged to be performed by actuation of a special key, and that the change is arranged to be allowed at just any point of time.

25. Device according to any of the patent claims 14-24,
**characterized** in that the verbal ordering is arranged to follow the structure of a natural language.

26. Device according to any of the patent claims 14-25,
**characterized** in that the mechanical ordering is allowed to follow a hierarchical structure.
